# EUROPÄISCHE PATENTSCHRIFT

(11) **EP 2 796 953 B1**
(45) Veröffentlichungstag und Bekanntmachung des Hinweises auf die Patenterteilung: **28.09.2016**
(21) Anmeldenummer: 13164931.1
(22) Anmeldetag: 23.04.2013
(51) Int. Cl.: G05B 19/4069, G05B 19/4093

(54) **Numerische Steuerung mit Anzeige einer Vorschau bei Änderungen des Teileprogramms**
Numerical controller with indicator for preview in case of changes to the part program
Commande numérique avec affichage d'une visualisation lors de changements du programme de pièces

(43) Veröffentlichungstag der Anmeldung: 29.10.2014
(73) Patentinhaber: Siemens Aktiengesellschaft, 80333 München (DE)
(72) Erfinder: Sinn, Christof, 75417 Mühlacker (DE); Stolper, Thilo, 70191 Stuttgart (DE)

(56) Entgegenhaltungen:
- EP-A2- 1 189 123
- JP-A- H1 145 106
- US-A1- 2004 051 720
- US-A1- 2004 267 508
- YUNG-CHOU KAO ET AL: "An intelligent virtual multi-axis machine tool remote service system", ADVANCED INTELLIGENT MECHATRONICS (AIM), 2012 IEEE/ASME INTERNATIONAL CONFERENCE ON, IEEE, 11. Juli 2012 (2012-07-11), Seiten 632-637, XP032222425, DOI: 10.1109/AIM.2012.6265920 ISBN: 978-1-4673-2575-2

## Beschreibung

Die vorliegende Erfindung betrifft ein Betriebsverfahren für eine numerische Steuerung,
- wobei die numerische Steuerung Zugriff auf ein Teileprogramm hat, das von der numerischen Steuerung ausführbar ist,
- wobei von der numerischen Steuerung durch Ausführen des Teileprogramms eine Werkzeugmaschine steuerbar ist,
- wobei der numerischen Steuerung von einem Bediener über eine Bedienerschnittstelle ein Auswahlbefehl vorgegeben wird, mittels dessen eine Programmanweisung des Teileprogramms selektiert wird, der mindestens ein Parameter zugeordnet ist,
- wobei die Programmanweisung beim Ausführen des Teileprogramms von der numerischen Steuerung in eine von dem mindestens einen Parameter abhängige Verfahrbewegung eines das Werkstück bearbeitenden Werkzeugs umgesetzt wird,
- wobei die numerische Steuerung den mindestens einen Parameter der parametrisierten Programmanweisung in vom Bediener änderbarer Form und ein mit einer durch Ausführen des Teileprogramms bis einschließlich zur selektierten Programmanweisung bewirkten Bearbeitung des Werkstücks korrespondierendes ursprüngliches Bild über die Bedienerschnittstelle an den Bediener der numerischen Steuerung ausgibt,
- wobei die numerische Steuerung im Falle einer Änderung eines Parameters der selektierten Programmanweisung ein mit einer durch Ausführen des Teileprogramms bis einschließlich zur geänderten Programmanweisung bewirkten Bearbeitung des Werkstücks korrespondierendes geändertes Bild über die Bedienerschnittstelle an den Bediener der numerischen Steuerung ausgibt,
- wobei die numerische Steuerung, sobald sie vom Bediener einen entsprechenden Bestätigungsbefehl entgegengenommen hat, ein entsprechend der geänderten Programmanweisung modifiziertes Teileprogramm speichert.

Die vorliegende Erfindung betrifft weiterhin ein Computerprogramm, wobei das Computerprogramm Maschinencode umfasst, der von einer numerischen Steuerung unmittelbar ausführbar ist, wobei die Ausführung des Maschinencodes durch die numerische Steuerung bewirkt, dass die numerische Steuerung ein derartiges Betriebsverfahren ausführt.

Die vorliegende Erfindung betrifft weiterhin eine numerische Steuerung, in der ein von der numerischen Steuerung ausführbares derartiges Computerprogramm gespeichert ist.

Ein derartiges Betriebsverfahren und die korrespondierende numerische Steuerung sind beispielsweise aus der JP H11 045 106 A bekannt

Numerische Steuerungen arbeiten im laufenden Betrieb üblicherweise ein so genanntes Teileprogramm ab. Das Teileprogramm legt fest, auf welche Weise lage- und drehzahlgeregelte Achsen der Produktionsmaschine (insbesondere einer Werkzeugmaschine) gesteuert werden. Theoretisch ist es möglich, das Teileprogramm direkt über die Bedienerschnittstelle der numerischen Steuerung zu generieren. Über die Bedienerschnittstelle der numerischen Steuerung steht jedoch nur ein deutlich eingeschränkter Befehlsvorrat zur Verfügung. In der Praxis wird das Teileprogramm daher, ausgehend von mittels eines CAD-Systems generierten Daten, mittels eines CAM-Systems generiert. Mittels des CAM-Systems ist der volle Befehlsvorrat der numerischen Steuerung ausnutzbar. Das CAM-System kann einen sogenannten Postprozessor mit umfassen.

Aufgrund der Generierung des Teileprogramms mittels des CAM-Systems umfasst das Teileprogramm zwei Arten von Programmanweisungen. Zum einen enthält das Teileprogramm Freiformbearbeitungen, zum anderen so genannte Zyklen.

Freiformbearbeitungen sind Bearbeitungen, bei denen der volle Befehlsvorrat der numerischen Steuerung genutzt wird. Eine Freiformbearbeitung ist mittels des eingeschränkten Befehlsvorrat, der über die Bedienerschnittstelle der numerischen Steuerung generiert werden kann, nicht programmierbar. Freiformbearbeitungen liegen innerhalb des Teileprogramms als Abfolge von einzelnen Steuerbefehlen für die lage- und drehzahlgeregelten Achsen der Produktionsmaschine vor. Die Abfolge der einzelnen Steuerbefehle kann sehr lang sein (teilweise mehrere Millionen von Steuerbefehlen) . Das Teileprogramm enthält hingegen in der Regel nicht mehr die parametrisierten Beschreibungen als solche, welche der Abfolge der einzelnen Steuerbefehle zu Grunde lagen. Die Parameter können der Abfolge der Steuerbefehle auch nicht mehr entnommen werden.

Beispiele derartiger Kriterien sind der Zeilenabstand, die Werkzeuggeometrie, die Bearbeitungsstrategie, Auswirkungen von Kollisionsvermeidungsrechnungen, technologische Werte wie beispielsweise die Anstellung des Werkzeuges usw.

Zyklen sind die Befehle des eingeschränkten Befehlsvorrats, welche über die Bedienerschnittstelle der numerischen Steuerung parametriert werden können. Auch ein Zyklus kann von dem Bediener des CAM-Systems programmiert werden. Bei einem Zyklus gibt der Bediener des CAM-Systems dem CAM-System - ebenso wie bei einer Freiformbearbeitung - eine Anzahl von Parametern vor. Im Gegensatz zu einer Freiformbearbeitung enthält das vom CAM-System generierte Teileprogramm jedoch nicht direkt die Abfolge der zugehörigen einzelnen Steuerbefehle für die lage- und drehzahlgeregelten Achsen der Produktionsmaschine, sondern einen Unterprogrammaufruf für den Zyklus sowie die entsprechende Parametrisierung. Die Umsetzung des Zyklus in die Abfolge der einzelnen Steuerbefehle für die lage- und drehzahlgeregelten Achsen der Produktionsmaschine wird in diesem Fall auf Seiten der numerischen Steuerung vorgenommen.

Der Bediener des CAM-Systems ist in der Regel eine vom Bediener der numerischen Steuerung verschiedene Person. In manchen Fällen fehlen dem Bediener des CAM-Systems technische Kenndaten der Produktionsmaschine, die mittels des Teileprogramms gesteuert werden soll. Dies kann zur Folge haben, dass die Ausführung des Teileprogramms durch die numerische Steuerung zu nicht ordnungsgemäß hergestellten Werkstücken führt. Je nach Lage des Einzelfalls kann es in derartigen Fällen erforderlich sein, erneut grundlegend neu das Teileprogramm zu ermitteln. In vielen Fällen ist für den Bediener der numerischen Steuerung jedoch aufgrund seiner Kenntnis der Produktionsmaschine und deren technischer Kenndaten ersichtlich, welcher Parameter welcher parametrisierten Beschreibung geändert werden muss, um ein ordnungsgemäßes Werkstück herstellen zu können.

Im Stand der Technik kann der Bediener der numerischen Steuerung Änderungen des Teileprogramms nur dann durchführen, wenn der zu ändernde Teil des Teileprogramms in der numerischen Steuerung in parametrisierter Form vorliegt, es sich also um einen parametrisierten Zyklus handelt. In allen anderen Fällen muss sich der Bediener der numerischen Steuerung mit dem Bediener des CAM-Systems in Verbindung setzen und diesem mitteilen, welche Parameter in welcher parametrisierten Beschreibung er geändert haben möchte. Der Bediener des CAM-Systems ruft daraufhin das CAM-System auf, ändert die entsprechende parametrisierte Beschreibung und erstellt sodann das Teileprogramm neu. Das entsprechend modifizierte Teileprogramm wird - in der Regel als Ersatz für das ursprüngliche Teileprogramm - an die numerische Steuerung übertragen. Neuerdings sind auch Bestrebungen im Gange, dem Bediener der numerischen Steuerung Möglichkeiten zur Verfügung zu stellen, mittels derer er auch diejenigen Teile des Teileprogramms ändern kann, die in der numerischen Steuerung nicht in parametrisierter Form vorliegen.

Wenn der zu ändernde Teil des Teileprogramms in der numerischen Steuerung in parametrisierter Form vorliegt, kann der Bediener der numerischen Steuerung die Änderung selbst vornehmen. Er ruft in diesem Fall über die Bedienerschnittstelle eine Ausgabemaske auf. In der Ausgabemaske gibt die numerische Steuerung die Parameter des entsprechenden Zyklus an den Bediener der numerischen Steuerung aus. Zusätzlich gibt die numerische Steuerung über die Ausgabemaske eine Darstellung der durch die Parameter des entsprechenden Zyklus bewirkten Bearbeitung an den Bediener aus. Die Darstellung kann animiert sein. Der Bediener der numerischen Steuerung ändert die Parameter und bestätigt danach die Änderung. Die numerische Steuerung speichert daraufhin das entsprechend modifizierte Teileprogramm ab.

Die Darstellung der bewirkten Bearbeitung ist im Stand der Technik rein schematischer Natur. Sie berücksichtigt weder die Stellung des entsprechenden Zyklus innerhalb des Teileprogramms noch die Anordnung und Orientierung der durch die Bearbeitung hergestellten Kontur innerhalb des durch das Teileprogramm als Ganzes hergestellten Werkstücks.

Die Vorgehensweise des Standes der Technik ist in verschiedener Hinsicht suboptimal. So ist es beispielsweise möglich, dass prinzipiell gleichwertige, orientierungsabhängige Parameter eines Zyklus (typisches Beispiel: Länge und Breite einer rechteckigen Kontur) verwechselt werden. Falls derselbe Zyklus mit verschiedenen Parametern mehrfach verwendet wird (Beispiel: Es soll dieselbe Kontur an verschiedenen Orten eingebracht werden), kann es weiterhin geschehen, dass versehentlich der falsche Zyklus parametriert wird. Weiterhin ist aus der Darstellung nicht ohne weiteres erkennbar, welche Veränderung des herzustellenden Werkstücks durch die Änderung der Parameter eines bestimmten Zyklus bewirkt wird.

Die Aufgabe der vorliegenden Erfindung besteht darin, die Nachteile des Standes der Technik zu vermeiden.

Die Aufgabe wird durch ein Betriebsverfahren mit den Merkmalen des Anspruchs 1 gelöst.

Erfindungsgemäß wird ein Betriebsverfahren der eingangs genannten Art dadurch ausgestaltet,
- dass die numerische Steuerung eine die selektierte Programmanweisung identifizierende Information über eine Rechner-Rechner-Verbindung direkt oder indirekt an ein CAM-System übermittelt, mittels dessen das Teileprogramm generiert wurde, und von dem CAM-System das ursprüngliche Bild entgegennimmt,
- dass die numerische Steuerung im Falle einer Änderung eines Parameters der selektierten Programmanweisung die Änderung an das CAM-System übermittelt und von dem CAM-System das geänderte Bild entgegennimmt und
- dass die numerische Steuerung das CAM-System, mittels dessen das Teileprogramm generiert wurde, selbsttätig anhand eines Headers des Teileprogramms ermittelt.

Die Aufgabe wird weiterhin durch ein Computerprogramm mit den Merkmalen des Anspruchs 2 gelöst. Erfindungsgemäß wird ein Computerprogramm der eingangs genannten Art dadurch ausgestaltet, dass die Ausführung des Maschinencodes durch die numerische Steuerung bewirkt, dass die numerische Steuerung ein erfindungsgemäßes Betriebsverfahren ausführt.

Die Aufgabe wird weiterhin gemäß Anspruch 3 durch eine numerische Steuerung gelöst, in der ein von der numerischen Steuerung ausführbares erfindungsgemäßes Computerprogramm gespeichert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Verbund mehrerer Einrichtungen,
- FIG 2: ein Hauptprogramm eines Teileprogramms,
- FIG 3: ein Unterprogramm eines Teileprogramms,
- FIG 4: eine Kommunikation des Verbundes von FIG 1 und
- FIG 5: eine Ausgabemaske.

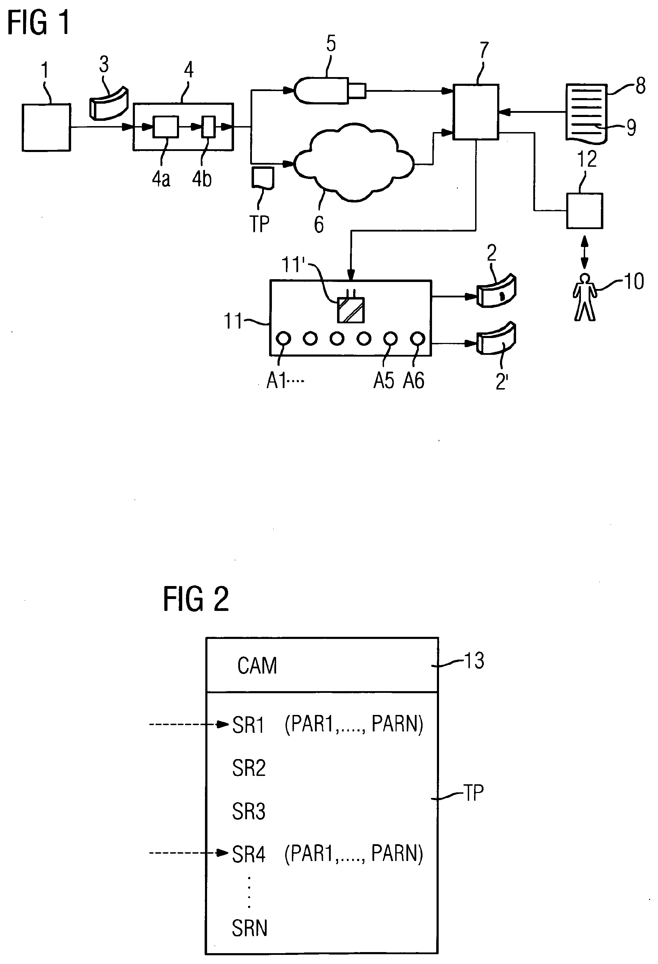

Nachstehend wird in Verbindung mit FIG 1 zunächst die typische Vorgehensweise des Standes der Technik erläutert, auf welcher die vorliegende Erfindung aufbaut.

Gemäß FIG 1 wird zunächst mittels eines CAD-Systems 1 ein herzustellendes Werkstück 2 spezifiziert. Eine (rein geometrische) Beschreibung 3 des Werkstücks 2 wird an ein CAM-Sys¬tem 4 weitergegeben. Das CAM-System 4 umfasst in der Regel einen CAM-Prozessor 4a und einen Postprozessor 4b. Mittels des CAM-Systems 4 wird ein Teileprogramm TP generiert. Der CAM-Prozessor 4a ist für ein Verfahrensmuster zuständig. In der Regel erzeugt der CAM-Prozessor 4a anhand von parametrisierten Masken, die Flächen des Werkstücks 2 zugeordnet werden, eine Abfolge von Werkzeugbahnen. Die Werkzeugbahnen sind in der Regel noch steuerungsneutral definiert. Der Postprozessor 4b setzt die Werkzeugbahnen in eine steuerungsspezifische Folge (= das Teileprogramm TP) um. Das Teileprogramm TP wird - beispielsweise über einen Datenträger 5 oder eine Rechner-Rechner-Verbindung 6 - an eine numerische Steuerung 7 übertragen. Die numerische Steuerung 7 hat dadurch Zugriff auf das Teileprogramm TP. Die Darstellung des Datenträgers 5 als USB-Memorystick ist rein beispielhaft. Die Rechner-Rechner-Verbindung 6 kann - je nach Lage des Einzelfalls - als LAN, als WAN oder als WWW ausgebildet sein.

Die numerische Steuerung 7 ist mit einem Computerprogramm 8 programmiert. Das Computerprogramm 8 ist in der numerischen Steuerung 7 intern gespeichert, beispielsweise in einem EEPROM oder in einem Flash-EPROM. Das Computerprogramm 8 umfasst Maschinencode 9, der von der numerischen Steuerung 7 unmittelbar ausführbar ist. Das Computerprogramm 8 wird in der Regel vom Hersteller der numerischen Steuerung 7 in der numerischen Steuerung 7 hinterlegt.

Die Ausführung des Maschinencodes 9 durch die numerische Steuerung 7 bewirkt zunächst, dass die numerische Steuerung 7 - nach Vorgabe eines entsprechenden Steuerbefehls durch einen Bediener 10 - das Teileprogramm TP ausführt. Durch Ausführen des Teileprogramms TP wird von der numerischen Steuerung 7 eine Werkzeugmaschine 11 gesteuert. Die Werkzeugmaschine 11 kann nach Bedarf ausgebildet sein, beispielsweise als Werkzeugmaschine mit drei, vier, fünf, ... lagegeregelten Achsen A1 bis A5. Durch das Ausführen des Teileprogramms TP (und die entsprechende Steuerung der Produktionsmaschine 11) wird das Werkstück 2 hergestellt.

Ein Hauptprogramm des Teileprogramms TP umfasst gemäß FIG 2 in der Regel Unterprogrammaufrufe SR1, SR2, ... SRN. Es kann sogar ausschließlich aus einer Sequenz von Unterprogrammaufrufen SR1, SR2, ... SRN bestehen.

Einige der Unterprogrammaufrufe SR1, SR2, ... SRN - gemäß FIG 2 die Unterprogrammaufrufe SR1 und SR4 - sind parametrisiert. Diese Teile des Teileprogramms TP sind der numerischen Steuerung 7 daher in parametrisierter Form vorgegeben. In einem derartigen Fall ist das zugehörige Unterprogramm unabhängig vom Teileprogramm TP in der numerischen Steuerung 7 hinterlegt (sogenannter Zyklus). Mittels des zugehörigen Unterprogramms wird der entsprechende Unterprogrammaufruf SR1, SR4 innerhalb der numerischen Steuerung 7 in eine Folge von einzelnen Verfahrbewegungen der lagegeregelten Achsen A1 bis A5 der Produktionsmaschine 11 umgesetzt. Die numerische Steuerung 7 berücksichtigt bei der Umsetzung in die Verfahrbewegungen der lagegeregelten Achsen A1 bis A5 die Parameter PAR1 bis PARN des entsprechenden Unterprogrammaufrufs SR1, SR4. Die Programmanweisung wird also von der numerischen Steuerung 7 beim Ausführen des Teileprogramms TP in eine von den Parametern PAR1 bis PARN abhängige Verfahrbewegung eines Werkzeugs 11' umgesetzt, mittels dessen das Werkstück 2 bearbeitet wird.

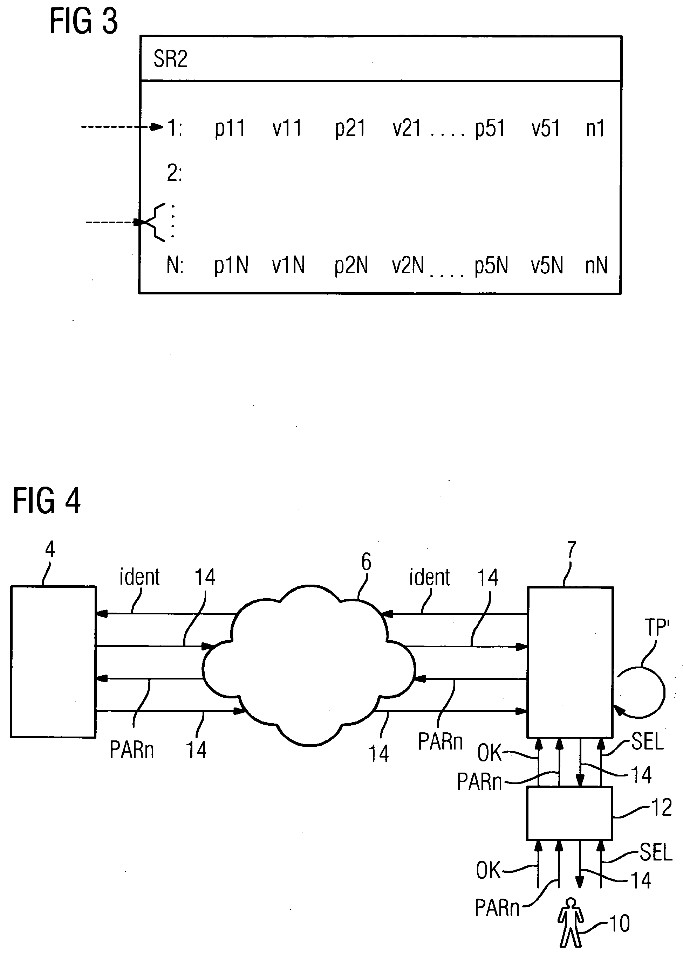

Andere der Unterprogrammaufrufe SR1, SR2, ... SRN - gemäß FIG 2 die Unterprogrammaufrufe SR2 und SR3 - sind nicht parametrisiert. In diesem Fall sind die zugehörigen Unterprogramme Bestandteil des Teileprogramms TP. Sie bestehen gemäß FIG 3 in der Regel aus einer (sehr langen) Abfolge einzelner Verfahrbewegungen der lagegeregelten Achsen A1 bis A5. Für jede einzelne Verfahrbewegung ist für jede lagegeregelte Achse A1 bis A5 ein jeweiliger Positionswert p11 bis p51, p1N bis p5N vorgegeben. Weiterhin ist meist für jede lagegeregelte Achse A1 bis A5 ein jeweiliger Geschwindigkeitswert v11 bis v51, v1N bis v5N vorgegeben. Weiterhin ist meist für mindestens eine drehzahlgeregelte Achse A6 eine Drehzahl n1 bis nN vorgegeben.

Es ist möglich, dass die nicht parametrisierten Unterprogrammaufrufe SR2, SR3 als solche entfallen und stattdessen die Abfolgen der einzelnen Verfahrbewegungen der lagegeregelten Achsen A1 bis A5 und gegebenenfalls auch der drehzahlgeregelten Achse A6 im Hauptprogramm des Teileprogramms TP enthalten sind.

Das Computerprogramm 8, mit dem die numerische Steuerung 7 programmiert ist, bewirkt über die Ausführung des Teileprogramms TP hinaus, dass der Bediener 10 über eine Bedienerschnittstelle 12 mit der numerischen Steuerung 7 kommunizieren kann und die numerische Steuerung 7 hierauf aufbauende Tätigkeiten ausführt. Das entsprechende Betriebsverfahren, das Gegenstand der vorliegenden Erfindung ist, wird nachfolgend in Verbindung mit FIG 4 näher erläutert.

Gemäß FIG 4 kann der Bediener 10 der numerischen Steuerung 7 über die Bedienerschnittstelle 12 einen Auswahlbefehl SEL vorgegeben. Mittels des Auswahlbefehls SEL wird mindestens eine Programmanweisung des Teileprogramms TP selektiert. Beispielsweise kann der Bediener 10, wie in FIG 2 durch gestrichelte Pfeile angedeutet ist, einen Unterprogrammaufruf SR1, SR4 selektieren, welcher der numerischen Steuerung 7 in parametrisierter Form vorgegeben ist, dessen zugehöriges Unterprogramm also unabhängig vom Teileprogramm TP in der numerischen Steuerung 7 hinterlegt ist.

Der numerischen Steuerung 7 ist bekannt, mittels welchen CAM-Systems 4 das Teileprogramm TP generiert wurde. Insbesondere enthält das Teileprogramm TP gemäß FIG 2 einen Header 13, in dem die entsprechende Information hinterlegt ist. Dadurch kann die numerische Steuerung 7 das zugehörige CAM-System 4 anhand des Headers 13 selbsttätig ermitteln. Die Information als solche kann beliebiger Natur sein. Beispielsweise kann sie in Form einer URL (universal resource locator) hinterlegt sein.

Aufgrund des Auswahlbefehls SEL übermittelt die numerische Steuerung 7 gemäß FIG 4 über die Rechner-Rechner-Verbindung 6 direkt oder indirekt eine Information ident an das CAM-System 4. Die Identifikation ident identifiziert die mindestens eine selektierte Programmanweisung. Beispielsweise kann die entsprechende Information ident die Zeilennummer des Hauptprogramms des Teileprogramms TP oder eine Kennzeichnung des entsprechenden Unterprogramms und dort die Zeilennummer umfassen.

Die Information ident wird vom CAM-System 4 automatisiert verarbeitet. Insbesondere ermittelt das CAM-System 4 ein Bild 14. Das Bild 14 korrespondiert mit dem Werkstück 2, wie es sich ergibt, wenn das Teileprogramm TP bis zur selektierten Programmanweisung ausgeführt wird. Es entspricht also einer bis dorthin bewirkten Bearbeitung des Werkstücks 2. Das Bild 14 zeigt zum einen realitätsgetreu die durch die selektierte Programmanweisung als solche bewirkte Bearbeitung, beispielsweise die von einem Bearbeitungswerkzeug abgefahrene Bahn oder andere Parameter wie beispielsweise einen Anstellwinkel. Weiterhin zeigt das Bild 14 realitätsgetreu die durch die Bearbeitung bewirkte Kontur. Das Bild 14 ist also realistisch in dem Sinne, dass dargestellte Maße und Winkel realitätsgetreu sind. Weiterhin zeigt das Bild 14 die durch die Bearbeitung bewirkte Kontur im Gesamtzusammenhang des Werkstücks 2, also auch beispielsweise die Anordnung der Kontur innerhalb des Werkstücks 2.

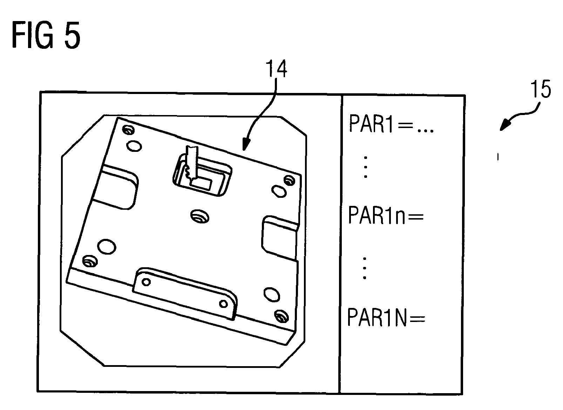

Das CAM-System 4 übermittelt das Bild 14 über die Rechner-Rechner-Verbindung 6 an die numerische Steuerung 7. Die numerische Steuerung 7 nimmt das Bild 14 entgegen. Die numerische Steuerung 7 gibt das Bild 14 zusammen mit den Parametern PAR1 bis PARN über die Bedienerschnittstelle 12 an den Bediener 10 der numerischen Steuerung 7 aus. FIG 5 zeigt die entsprechende Darstellung in einer Ausgabemaske 15.

Die Ausgabe der Parameter PAR1 bis PARN erfolgt in einer vom Bediener 10 änderbaren Form. Der Bediener 10 kann die Parameter PAR1 bis PARN also ändern. Wenn der Bediener 10 einen der Parameter PAR1 bis PARN ändert, beispielsweise den Parameter PARn, übermittelt die numerische Steuerung 7 die Änderung an das CAM-System 4. Die Übermittlung erfolgt unmittelbar nach der Vorgabe der Änderung. Aufgrund des geänderten Parameters PARn ermittelt das CAM-System 4 erneut ein Bild 14. Das erneut ermittelte Bild 14 korrespondiert mit dem Werkstück 2, wie es sich ergibt, wenn das Teileprogramm TP bis zur geänderten Programmanweisung ausgeführt wird. Die numerische Steuerung 7 nimmt das erneut ermittelte Bild 14 entgegen und gibt es über die Bedienerschnittstelle 12 an den Bediener 10 der numerischen Steuerung 7 aus.

Das dargestellte Bild 14 korrespondiert somit (mit Ausnahme unvermeidbarer Wartezeiten) jederzeit mit der Bearbeitung des Werkstücks 2, wie sie sich ergibt, wenn das Teileprogramm TP bis zur selektierten Programmanweisung in der momentan gültigen Parametrisierung ausgeführt wird. Der Bediener 10 der numerischen Steuerung 7 kann daher nach Bedarf Änderungen der Parametrisierung der selektierten Programmanweisung vornehmen und erhält jeweils das realitätsgetreue Bild 14 der korrespondierenden Bearbeitung. Der Bediener 10 kann dadurch sehr effizient die selektierte Programmanweisung optimieren.

Wenn der Bediener 10 seine Optimierung beendet hat, gibt er der numerischen Steuerung 7 einen entsprechenden Bestätigungsbefehl OK vor. Sobald die numerische Steuerung 7 vom Bediener 10 den Bestätigungsbefehl OK entgegengenommen hat, speichert sie ein modifiziertes Teileprogramm TP' ab. Das modifizierte Teileprogramm TP' entspricht mit Ausnahme der selektierten, geänderten Programmanweisung dem ursprünglichen Teileprogramm TP. Es enthält jedoch anstelle der ursprünglich selektierten Programmanweisung nunmehr die geänderte Programmanweisung.

Die vorliegende Erfindung weist viele Vorteile auf. Insbesondere steht dem Bediener 10 der numerischen Steuerung 7 jederzeit ein realistisches Bild 14 zur Verfügung, anhand dessen er die von ihm vorgenommenen Änderungen einer Programmanweisung realistisch beurteilen kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine numerische Steuerung (7),
- wobei die numerische Steuerung (7) Zugriff auf ein Teileprogramm (TP) hat, das von der numerischen Steuerung (7) ausführbar ist,
- wobei von der numerischen Steuerung (7) durch Ausführen des Teileprogramms (TP) eine Werkzeugmaschine (11) steuerbar ist,
- wobei der numerischen Steuerung (7) von einem Bediener (10) über eine Bedienerschnittstelle (12) ein Auswahlbefehl (SEL) vorgegeben wird, mittels dessen eine Programmanweisung des Teileprogramms (TP) selektiert wird, der mindestens ein Parameter (PAR1 bis PARN) zugeordnet ist,
- wobei die Programmanweisung beim Ausführen des Teileprogramms (TP) von der numerischen Steuerung (7) in eine von dem mindestens einen Parameter (PAR1 bis PARN) abhängige Verfahrbewegung eines das Werkstück (2) bearbeitenden Werkzeugs (11') umgesetzt wird,
- wobei die numerische Steuerung (7) den mindestens einen Parameter (PAR1 bis PARN) der parametrisierten Programmanweisung in vom Bediener änderbarer Form und ein mit einer durch Ausführen des Teileprogramms (TP) bis einschließlich zur selektierten Programmanweisung bewirkten Bearbeitung des Werkstücks (2) korrespondierendes ursprüngliches Bild (14) über die Bedienerschnittstelle (12) an den Bediener (10) der numerischen Steuerung (7) ausgibt,
- wobei die numerische Steuerung (7) im Falle einer Änderung eines Parameters (PARn) der selektierten Programmanweisung ein mit einer durch Ausführen des Teileprogramms (TP) bis einschließlich zur geänderten Programmanweisung bewirkten Bearbeitung des Werkstücks (2) korrespondierendes geändertes Bild (14) über die Bedienerschnittstelle (12) an den Bediener (10) der numerischen Steuerung (7) ausgibt,
- wobei die numerische Steuerung (7), sobald sie vom Bediener (10) einen entsprechenden Bestätigungsbefehl (OK) entgegengenommen hat, ein entsprechend der geänderten Programmanweisung modifiziertes Teileprogramm (TP') speichert,
**dadurch gekennzeichnet,**
- **dass** die numerische Steuerung (7) eine die selektierte Programmanweisung identifizierende Information (ident) über eine Rechner-Rechner-Verbindung (6) direkt oder indirekt an ein CAM-System (4) übermittelt, mittels dessen das Teileprogramm (TP) generiert wurde, und von dem CAM-System (4) das ursprüngliche Bild (14) entgegennimmt,
- **dass** die numerische Steuerung (7) im Falle einer Änderung eines Parameters (PARn) der selektierten Programmanweisung die Änderung an das CAM-System (4) übermittelt und von dem CAM-System (4) das geänderte Bild (14) entgegennimmt und
- **dass** die numerische Steuerung (7) das CAM-System (4), mittels dessen das Teileprogramm (TP) generiert wurde, selbsttätig anhand eines Headers (13) des Teileprogramms (TP) ermittelt.

2. Computerprogramm, wobei das Computerprogramm Maschinencode (9) umfasst, der von einer numerischen Steuerung (7) unmittelbar ausführbar ist, wobei die Ausführung des Maschinencodes (9) durch die numerische Steuerung (7) bewirkt, dass die numerische Steuerung (7) ein Betriebsverfahren nach Anspruch 1 ausführt.

3. Numerische Steuerung, in der ein von der numerischen Steuerung ausführbares Computerprogramm (8) nach Anspruch 2 gespeichert ist.

## Claims

1. Operating method for a numerical controller (7),
- wherein the numerical controller (7) has access to a part program (TP) which can be executed by the numerical controller (7),
- wherein a machine tool (11) can be controlled by the numerical controller (7) by executing the part program (TP),
- wherein a selection command (SEL) is predetermined by way of a user interface (12) by a user (10) to the numerical controller (7), by means of which selection command (SEL) a program instruction of the part program (TP) is selected, to which at least one parameter (PAR1 to PARN)is assigned,
- wherein when the part program (TP) is executed by the numerical controller (7), the program instruction is converted into a movement of a tool (11') processing the workpiece (2) as a function of the at least one parameter (PAR1 to PARN),
- wherein the numerical controller (7) outputs the at least one parameter (PAR1 to PARN) of the parameterized program instruction in a form which can be changed by the user and an original image (14) which corresponds to a processing of the workpiece (2) effected by executing the part program (TP) up to and including the selected program instruction by way of the user interface (12) to the user (10) of the numerical controller (7),
- wherein in the event of a change to a parameter (PARn) of the selected program instruction, the numerical controller (7) outputs a changed image (14) which corresponds to a processing of the workpiece (2) effected by executing the part program (TP) up to and including the changed program instruction by way of the user interface (12) to the user (10) of the numerical controller (7),
- wherein once the numerical controller (7) has received a corresponding confirmation command (OK) from the user (10), it stores a part program (TP') changed according to the changed program instruction,
**characterised in that**,
- the numerical controller (7) transfers an item of information (ident) identifying the selected program instruction via a computer-computer link (6) directly or indirectly to a CAM system (4), by means of which the part program (TP) was generated, and receives the original image (14) from the CAM system (4),
- in the event of a change to a parameter (PARn) of the selected program instruction, the numerical controller (7) transfers the change to the CAM system (4) and receives the changed image (14) from the CAM system (4), and
- the numerical controller (7) automatically determines the CAM system (4), by means of which the part program (TP) was generated, on the basis of a header (13) of the part program (TP).

2. Computer program, wherein the computer program comprises machine code (9), which can be executed directly by a numerical controller (7), wherein the execution of the machine code (9) by the numerical controller (7) causes the numerical controller (7) to execute an operating method according to claim 1.

3. Numerical controller, in which a computer program (8) according to claim 2 which can be executed by the numerical controller is stored.

## Revendications

1. Procédé pour faire fonctionner une commande (7) numérique,
- dans lequel la commande (7) numérique a accès à un sous-programme (TP), qui peut être exécuté par la commande (7) numérique,
- dans lequel une machine-outil (11) peut être commandée par la commande (7) numérique par exécution du sous-programme (TP),
- dans lequel il est prescrit, à la commande (7) numérique, par un opérateur (10), par l'intermédiaire d'une interface (12) d'opérateur, un ordre (SEL) de sélection, au moyen duquel est sélectionnée une instruction du sous-programme (TP), à laquelle est affecté au moins un paramètre (PAR1 à PARN),
- dans lequel l'instruction du programme est, lors de l'exécution du sous-programme (TP) par la commande (7) numérique, transformée en un mouvement de déplacement, dépendant du au moins un paramètre (PAR1 à PARN), de l'outil (11') usinant la pièce (2),
- dans lequel la commande (7) numérique envoie, à l'opérateur (10), par l'intermédiaire de l'interface (12) d'opérateur, le au moins un paramètre (PAR1 à PARN) de l'instruction du programme paramétrisée sous forme modifiable par l'opérateur et une image (14) d'origine correspondant à un usinage de la pièce (2) provoqué par l'exécution du sous-programme (TP) jusqu'à y compris l'instruction de programme sélectionnée,
- dans lequel la commande (7) numérique envoie, à l'opérateur (10) de la commande (7) numérique, par l'intermédiaire de l'interface (12) d'opérateur, dans le cas d'une modification d'un paramètre (PARn) de l'instruction de programme sélectionnée, une image (14) modifiée correspondant à un usinage de la pièce (2) provoqué par l'exécution du sous-programme (TP) jusqu'à y compris l'instruction de programme modifiée,
- dans lequel la commande (7) numérique mémorise, dès qu'elle a reçu de l'opérateur (10) un ordre (OK) d'actionnement correspondant, un sous-programme (TP') modifié correspondant à l'instruction de programme modifiée,
**caractérisé**
- **en ce que** la commande (7) numérique transmet directement ou indirectement à un système CAM (4), par l'intermédiaire d'une liaison (6) ordinateur-ordinateur, une information (ident) identifiant l'instruction de programme sélectionnée, système CAM (4) au moyen duquel le sous-programme (TP) a été créé et reçoit du système CAM (4) l'image (14) d'origine,
- **en ce que** la commande (7) numérique transmet, dans le cas d'une modification d'un paramètre (PARn) de l'instruction de programme sélectionnée, la modification au système CAM (4) et reçoit l'image (14) modifiée du système CAM (4) et
- **en ce que** la commande (7) numérique détermine automatiquement, à l'aide d'un header (13) du sous-programme (TP), le système CAM (4) au moyen duquel le sous-programme (TP) a été créé.

2. Programme d'ordinateur, dans lequel le programme d'ordinateur comprend un code-machine (9), qui peut être exécuté directement par une commande (7) numérique, l'exécution du code-machine (9) par la commande (7) numérique faisant que la commande (7) numérique exécute un procédé de fonctionnement suivant la revendication 1.

3. Commande numérique, dans laquelle est mémorisé un programme (8) d'ordinateur suivant la revendication 2 pouvant être exécuté par la commande numérique.
